# EUROPÄISCHE PATENTSCHRIFT

(11) **EP 3 811 262 B1**
(45) Veröffentlichungstag und Bekanntmachung des Hinweises auf die Patenterteilung: **18.12.2024**
(21) Anmeldenummer: 19727324.6
(22) Anmeldetag: 22.05.2019
(51) Int. Cl.: G06F 21/57, G06F 21/51, G06F 21/56, G06F 21/64, H04L 9/32, G06F 12/14

(54) **RECHENEINRICHTUNG UND BETRIEBSVERFAHREN HIERFÜR**
COMPUTING DEVICE AND METHOD FOR OPERATING SAME
DISPOSITIF DE CALCUL ET PROCÉDÉ DE FONCTIONNEMENT ASSOCIÉ

(30) Priorität: 20.06.2018 DE 102018209965; 13.07.2018 DE 102018211752; 13.08.2018 DE 102018213617
(43) Veröffentlichungstag der Anmeldung: 28.04.2021
(73) Patentinhaber: Robert Bosch GmbH, 70442 Stuttgart (DE)
(72) Erfinder: STUMPF, Frederic, 71229 Leonberg (DE); JUNG, Ramona, 70499 Stuttgart (DE); WEBER, Andreas, 71287 Weissach (DE); LENZ, Christoph, 71522 Backnang (DE); SCHRAMM, Juergen, 74321 Bietigheim-Bissingen (DE); MEURER, Alexander, 44791 Bochum (DE); ZIEGLER, Florian, 70378 Stuttgart (DE); SAGAR, Ilias, 70469 Stuttgart (DE)
(86) Internationale Anmeldenummer: PCT/EP2019/063188
(87) Internationale Veröffentlichungsnummer: WO 2019/242971

(56) Entgegenhaltungen:
- US-A1- 2005 193 217
- US-A1- 2006 036 853
- US-A1- 2009 327 678
- US-A1- 2013 117 578
- US-A1- 2018 150 637

## Beschreibung

### Stand der Technik

Die Offenbarung betrifft eine Recheneinrichtung mit wenigstens einem Rechenkern zur Ausführung eines ersten Computerprogramms, wobei die Recheneinrichtung dazu ausgebildet ist, auf eine Speichereinrichtung zuzugreifen, insbesondere um das erste Computerprogramm zu laden. Derartige Recheneinrichtungen werden beispielsweise in Steuergeräten für Kraftfahrzeuge verwendet, beispielsweise in Form von sog. eingebetteten Systemen ("embedded systems").

Die Offenbarung betrifft ferner ein Verfahren zum Betreiben einer derartigen Recheneinrichtung.

US 2013/117578 A1 beschreibt ein Verfahren zum Verifizieren eines Speicherblocks eines nichtflüchtigen Speichers. US 2018/150637 A1 beschreibt ein Verfahren zum sicheren Booten eines Computersystems. US 2009/0327678 A1 beschreibt ein System und Verfahren zur Ausführung einer pre-boot Sicherheitsverifikation. US 2005/193217 A1 beschreibt einen autonomen Speicherprüfer zur Gewährleistung der Laufzeitsicherheit. US 2006/036853 A1 beschreibt Systeme und Verfahren, die die Authentifizierung von Speichergeräteinhalten unterstützen.

### Offenbarung der Erfindung

Es ist Aufgabe der vorliegenden Erfindung, eine Recheneinrichtung mit gesteigerter Sicherheit und gesteigertem Gebrauchsnutzen anzugeben.

Diese Aufgabe wird bei der Recheneinrichtung der eingangs genannten Art durch die Merkmalskombination gemäß Patentanspruch 1 gelöst. Dies ermöglicht vorteilhaft, eine Überprüfung des ersten Computerprogramms durch das Kryptografiemodul anzustoßen. Dadurch ist vorteilhaft die Möglichkeit gegeben, das erste Computerprogramm bzw. einen Inhalt des Speicherbereichs, in dem das erste Computerprogramm gespeichert ist, beispielsweise auf Abweichungen gegenüber einem vorgebbaren Inhalt hin, zu überprüfen. Hierdurch kann vorteilhaft beispielsweise die Ausführung von unsicheren bzw. durch einen Angreifer kompromittierten Computerprogrammen durch die Recheneinrichtung verhindert werden. Weiter vorteilhaft kann dem Kryptografiemodul mittels des ersten Steuerbefehls der zu überprüfende Speicherbereich bzw. die zu überprüfenden Speicherbereiche signalisiert werden (z.B. Adressinformationen, welche Speicherblöcke zu überprüfen sind), so dass diese Informationen z.B. nicht vorkonfiguriert werden müssen. Vielmehr kann der zu überprüfende Speicherbereich bzw. können die zu überprüfenden Speicherbereiche bzw. Computerprogramme dynamisch (z.B. zur Laufzeit des Kryptografiemoduls bzw. der Recheneinrichtung) mittels des ersten Steuerbefehls signalisiert werden, wodurch die Flexibilität weiter gesteigert wird.

Bei bevorzugten Ausführungsformen kann die Speichereinrichtung extern zu der Recheneinrichtung (und insbesondere auch extern zu dem Kryptografiemodul) angeordnet bzw. vorgesehen sein. Bei weiteren bevorzugten Ausführungsformen kann die Speichereinrichtung jedoch auch in die Recheneinrichtung integriert sein. Bei noch weiteren bevorzugten Ausführungsformen kann vorteilhaft auch ein System, insbesondere ein Ein-chip-System (englisch: system-on-a-chip, SoC), vorgesehen sein, das die Recheneinrichtung gemäß den Ausführungsformen, die Speichereinrichtung und das Kryptografiemodul gemäß den Ausführungsformen aufweist.

Bei weiteren bevorzugten Ausführungsformen ist die Recheneinrichtung dazu ausgebildet, eine Antwort des Kryptografiemoduls auf den ersten Steuerbefehl zu empfangen oder aus dem Kryptografiemodul auszulesen (z.B. aus einem Speicherbereich des Kryptografiemoduls, auf den die Recheneinrichtung lesend (bevorzugt nur lesend, nicht schreibend) zugreifen kann), wobei insbesondere die Antwort Informationen über das Ergebnis einer Prüfung des durch den Steuerbefehl charakterisierten Computerprogramms bzw. des dem ersten Computerprogramm zugeordneten Speicherbereichs der Speichereinrichtung aufweist.

Bei weiteren bevorzugten Ausführungsformen ist vorgesehen, dass das Kryptografiemodul dazu ausgebildet ist, die Überprüfung des ersten Computerprogramms bzw. des wenigstens einen Speicherbereichs unter Verwendung eines schlüsselbasierten Nachrichtenauthentifizierungscodes, CMAC (Cipher-based Message Authentication Code), auszuführen. Dadurch ist eine besonders effiziente Überprüfung ermöglicht. Eine Internetpublikation, die sich auf eine beispielhafte Ausgestaltung des CMAC-Verfahrens bezieht, ist beispielsweise unter https://doi.org/10.6028%2Fnist.sp.800-38b abrufbar. Ein Ergebnis der Überprüfung kann in einen bzw. den Speicherbereich des Kryptografiemoduls geschrieben werden, auf den die Recheneinrichtung lesend (bevorzugt nur lesend, nicht schreibend) zugreifen kann. Somit kann die Recheneinrichtung bei weiteren bevorzugten Ausführungsformen das Ergebnis der Überprüfung aus diesem Speicherbereich des Kryptografiemoduls auslesen.

Bei weiteren bevorzugten Ausführungsformen ist vorgesehen, dass das Kryptografiemodul eine, vorzugsweise in das Kryptografiemodul integrierte, Speichereinheit zur Speicherung wenigstens eines Referenzwerts und/oder eines Referenzlayouts für den wenigstens einen Speicherbereich aufweist. Bei weiteren bevorzugten Ausführungsformen kann der Referenzwert beispielsweise einen CMAC-Wert für einen vorgebbaren Speicherinhalt repräsentieren, der beispielsweise mit einem CMAC-Wert vergleichbar ist, der bei der Überprüfung des wenigstens einen ersten Computerprogramms bzw. Speicherbereichs durch das Kryptografiemodul ermittelt worden ist. Sofern der ermittelte CMAC-Wert von dem Referenzwert abweicht, kann auf eine unzulässige Veränderung des Speicherinhalts des überprüften Speicherbereichs und insbesondere des darin gespeicherten Computerprogramms geschlossen werden.

Bei weiteren bevorzugten Ausführungsformen ist vorgesehen, dass das Kryptografiemodul dazu ausgebildet ist, die Überprüfung in Abhängigkeit des Referenzwerts auszuführen. Bei diesen Ausführungsformen umfasst die Überprüfung beispielsweise die Bildung eines CMAC-Werts in Abhängigkeit des ersten Computerprogramms bzw. des Speicherinhalts des wenigstens einen Speicherbereichs und einen Vergleich des so gebildeten CMAC-Werts mit dem Referenzwert, wie er beispielsweise in der Speichereinheit des Kryptografiemoduls hinterlegt ist. Alternativ oder ergänzend kann der Referenzwert bei weiteren bevorzugten Ausführungsformen auch durch die Recheneinrichtung mittels des ersten Steuerbefehls an das Kryptografiemodul gesendet werden. Weiter alternativ oder ergänzend können bei weiteren Ausführungsformen auch mehrere Referenzwerte für mehrere zu überprüfende Computerprogramme bzw. Speicherbereiche mittels des ersten Steuerbefehls an das Kryptografiemodul gesendet werden.

Bei weiteren bevorzugten Ausführungsformen kann das Referenzlayout ein oder mehrere der folgenden Informationen enthalten: a) Anzahl der Computerprogramme bzw. Speicherbereiche in der Speichereinrichtung, auf die die Recheneinrichtung zugreifen kann, b) Adressbereich (Startadresse und/oder Endadresse) der betreffenden Computerprogramme bzw. Speicherbereiche, c) Länge der betreffenden Computerprogramme bzw. Speicherbereiche, d) wenigstens einen Referenzwert (beispielsweise ein CMAC-Wert) des betreffenden Computerprogramms bzw. Speicherbereichs, e) Daten betreffend eine kryptografische Signatur, beispielsweise eine Signaturadresse und/oder einen Signaturtyp und/oder eine Referenz auf ein übergeordnetes Zertifikat ("root certificate"). Die Informationen können bevorzugt in einer mehrere entsprechende Datenfelder aufweisenden Datenstruktur gespeichert sein.

Bei weiteren bevorzugten Ausführungsformen kann das Kryptografiemodul die vorstehend genannten Referenzwerte bzw. das Referenzlayout nutzen, um die Art und den Umfang einer Überprüfung wenigstens eines Computerprogramms bzw. Speicherbereichs festzulegen. Beispielsweise kann anhand einer Startadresse und Endadresse die Menge der Eingangsdaten für die Überprüfung (z.B. CMAC-Wert-Bildung) festgelegt werden.

Vorteilhaft ist die Recheneinrichtung dazu ausgebildet, das erste Computerprogramm direkt nach dem Senden des ersten Steuerbefehls an das Kryptografiemodul auszuführen, insbesondere ohne auf eine bzw. die Antwort des Kryptografiemoduls auf den ersten Steuerbefehl zu warten und/oder ohne die Antwort aus dem Kryptografiemodul auszulesen. Somit kommt das erste Computerprogramm also bereits zur Ausführung durch die Recheneinrichtung, noch bevor eine Überprüfung des ersten Computerprogramms durch das Kryptografiemodul abgeschlossen ist bzw. das Ergebnis der Überprüfung des ersten Computerprogramms durch das Kryptografiemodul von der Recheneinrichtung (z.B. in Form der Antwort auf den ersten Steuerbefehl) ausgelesen wird. Damit ist eine besonders schnelle Ausführung des ersten Computerprogramms durch die Recheneinrichtung sichergestellt, und gleichzeitig ist die Überprüfung des ersten Computerprogramms durch das Kryptografiemodul mittels des ersten Steuerbefehls wenigstens initiiert worden.

Bei weiteren bevorzugten Ausführungsformen ist vorgesehen, dass die Recheneinrichtung dazu ausgebildet ist, auf eine bzw. die Antwort des Kryptografiemoduls auf den ersten Steuerbefehl zu warten und/oder die Antwort aus dem Kryptografiemodul auszulesen, und erst nach einem Empfang bzw. dem Auslesen der Antwort das erste Computerprogramm auszuführen. Damit ist eine besonders sichere Ausführung des ersten Computerprogramms ermöglicht, die erst nach der Überprüfung durch das Kryptografiemodul erfolgt.

Bei weiteren bevorzugten Ausführungsformen ist vorgesehen, dass die Recheneinrichtung dazu ausgebildet ist, einen Betrieb der Recheneinrichtung in Abhängigkeit der Antwort zu steuern. Dadurch kann beispielsweise bei einem negativen Ergebnis der Überprüfung des ersten Computerprogramms durch das Kryptografiemodul (erstes Computerprogramm ist beispielsweise aufgrund eines Fehlers in der Speichereinrichtung verändert oder manipuliert worden) eine Fehlerreaktion durch die Recheneinrichtung und/oder durch das Kryptografiemodul eingeleitet werden. Die Fehlerreaktion kann beispielsweise wenigstens eine der folgenden Maßnahmen vorsehen: Abbruch der Ausführung des ersten Computerprogramms durch die Recheneinrichtung (sofern möglich), Verhinderung einer wiederholten bzw. neuerlichen Ausführung des ersten Computerprogramms durch die Recheneinrichtung, Signalisierung eines Fehlerzustands an eine externe Einheit, Resetierung (Zurücksetzen) der Recheneinrichtung, zeitweise oder dauerhafte Deaktivierung der Recheneinrichtung, Löschung des ersten Computerprogramms aus der Speichereinrichtung.

Bei weiteren bevorzugten Ausführungsformen ist vorgesehen, dass a) die Speichereinrichtung in die Recheneinrichtung integriert ist, und/oder dass b) die Speichereinrichtung extern zu der Recheneinrichtung vorgesehen ist.

Weitere bevorzugte Ausführungsformen beziehen sich auf ein Verfahren zum Betreiben einer Recheneinrichtung gemäß Patentanspruch 6.

Bei weiteren bevorzugten Ausführungsformen ist vorgesehen, dass die Recheneinrichtung eine Antwort des Kryptografiemoduls auf den ersten Steuerbefehl empfängt oder aus dem Kryptografiemodul ausliest, wobei insbesondere die Antwort Informationen über das Ergebnis einer Prüfung des durch den Steuerbefehl charakterisierten Computerprogramms bzw. des dem ersten Computerprogramm zugeordneten Speicherbereichs der Speichereinrichtung aufweist.

Vorteilhaft ist vorgesehen, dass die Recheneinrichtung das erste Computerprogramm direkt nach dem Senden des ersten Steuerbefehls an das Kryptografiemodul ausführt, insbesondere ohne auf eine bzw. die Antwort des Kryptografiemoduls auf den ersten Steuerbefehl zu warten und/oder ohne (insbesondere vor dem Start des ersten Computerprogramms) die Antwort aus dem Kryptografiemodul auszulesen.

Weitere bevorzugte Ausführungsformen beziehen sich auf ein System gemäß Patentanspruch 8.

Weitere vorteilhafte Ausführungsformen sind Gegenstand der Unteransprüche.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Ansprüchen oder deren Rückbeziehung sowie unabhängig von ihrer Formulierung bzw. Darstellung in der Beschreibung bzw. in der Zeichnung.

In der Zeichnung zeigt:
- Figur 1: schematisch ein vereinfachtes Blockdiagramm einer Recheneinrichtung gemäß einer Ausführungsform,
- Figur 2: schematisch ein vereinfachtes Blockdiagramm einer Recheneinrichtung gemäß einer weiteren Ausführungsform,
- Figur 3: schematisch ein vereinfachtes Blockdiagramm einer weiteren Ausführungsform,
- Figur 4: schematisch ein vereinfachtes Blockdiagramm eines Kryptografiemoduls gemäß einer Ausführungsform,
- Figur 5: schematisch ein vereinfachtes Flussdiagramm eines Verfahrens gemäß einer Ausführungsform,
- Figur 6: schematisch ein vereinfachtes Flussdiagramm eines Verfahrens gemäß einer weiteren Ausführungsform,
- Figur 7: schematisch ein vereinfachtes Flussdiagramm gemäß einer weiteren Ausführungsform, und
- Figur 8: schematisch eine Datenstruktur gemäß einer Ausführungsform.

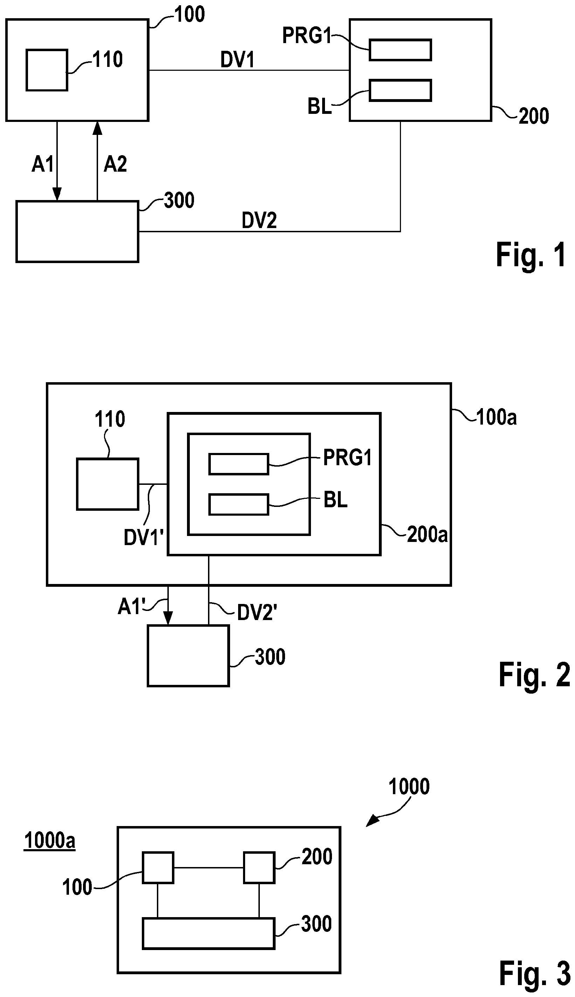

Figur 1 zeigt schematisch ein vereinfachtes Blockdiagramm einer Recheneinrichtung 100 gemäß einer Ausführungsform. Die Recheneinrichtung 100 weist wenigstens einen Rechenkern 110 zur Ausführung eines ersten Computerprogramms PRG1 auf, das beispielsweise zumindest zeitweise in einer Speichereinrichtung 200 gespeichert ist, auf die die Recheneinrichtung 100 zugreifen kann. Die Speichereinrichtung 200 umfasst z.B. einen Arbeitsspeicher (RAM) und/oder einen nichtflüchtigen Speicher (z.B. Flash-EEPROM).

Vorliegend erfolgt der Zugriff der Recheneinrichtung 100 auf die Speichereinrichtung 200 mittels einer ersten Datenverbindung DV1, die beispielsweise wenigstens einen Address- und oder Datenbus aufweisen kann. Ein Bootloader BL für die Recheneinrichtung 100 sowie ggf. weitere Computerprogramme (nicht gezeigt) können bei weiteren Ausführungsformen ebenfalls in der Speichereinrichtung 200 gespeichert sein.

Die Recheneinrichtung 100 ist dazu ausgebildet, das erste Computerprogramm PRG1 zu laden und auszuführen. Die Recheneinrichtung 100 ist ferner dazu ausgebildet, einen ersten Steuerbefehl A1, der das erste Computerporgramm PRG1 und/oder einen dem ersten Computerprogramm PRG1 zugeordneten Speicherbereich (z.B. Adressbereich in einem Adressraum der Speichereinrichtung 200) charakterisiert, an wenigstens ein Kryptografiemodul 300 zu senden. Das Kryptografiemodul 300 ist dazu ausgebildet, das durch den ersten Steuerbefehl A1 charakterisierte Computerporgramm PRG1 bzw. den dem ersten Computerprogramm PRG1 zugeordneten Speicherbereich der Speichereinrichtung 200 zu überprüfen. Dies ermöglicht vorteilhaft, eine Überprüfung des ersten Computerprogramms PRG1 durch das Kryptografiemodul 300 anzustoßen und auszuführen. Dadurch ist vorteilhaft die Möglichkeit gegeben, das erste Computerprogramm PRG1 bzw. einen Inhalt des Speicherbereichs, in dem das erste Computerprogramm PRG1 gespeichert ist, beispielsweise auf Abweichungen gegenüber einem vorgebbaren Inhalt hin, zu überprüfen. Hierdurch kann vorteilhaft beispielsweise die Ausführung von unsicheren bzw. durch einen Angreifer kompromittierten Computerprogrammen PRG1 durch die Recheneinrichtung 100 verhindert werden. Weiter vorteilhaft kann dem Kryptografiemodul 300 mittels des ersten Steuerbefehls A1 der zu überprüfende Speicherbereich bzw. die zu überprüfenden Speicherbereiche signalisiert werden (z.B. Adressinformationen, welche Speicherblöcke zu überprüfen sind), so dass diese Informationen z.B. nicht vorkonfiguriert werden müssen. Vielmehr kann der zu überprüfende Speicherbereich bzw. können die zu überprüfenden Speicherbereiche bzw. Computerprogramme PRG1 dynamisch (z.B. zur Laufzeit des Kryptografiemoduls 300 bzw. der Recheneinrichtung 100) mittels des ersten Steuerbefehls A1 signalisiert werden, wodurch die Flexibilität weiter gesteigert wird.

Bei weiteren bevorzugten Ausführungsformen kann die Speichereinrichtung 200 extern zu der Recheneinrichtung 100 (und insbesondere auch extern zu dem Kryptografiemodul 300) angeordnet bzw. vorgesehen sein. Das Kryptografiemodul 300 kann z.B. über eine zweite Datenverbindung DV2, die bei weiteren Ausführungsformen auch identisch oder ähnlich zu der ersten Datenverbindung DV1 ausgebildet sein kann, auf die Speichereinrichtung 200 zugreifen.

Bei weiteren bevorzugten Ausführungsformen, vgl. die Konfiguration 100a gemäß Figur 2, kann die Speichereinrichtung 200a jedoch auch in die Recheneinrichtung 100a integriert sein. Der Rechenkern 110 kann über die Datenverbindung DV1`, und das Kryptografiemodul 300 kann über die Datenverbindung DV2` auf die Speichereinrichtung 200a zugreifen. Ein Steuerbefehl zum Initiieren einer Überprüfung des ersten Computerprogramms PRG1 ist in Fig. 2 mit dem Bezugszeichen A1` bezeichnet.

Bei noch weiteren bevorzugten Ausführungsformen, vgl. Fig. 3, kann vorteilhaft auch ein System 1000, insbesondere ein Ein-chip-System (englisch: system-ona-chip, SoC) 1000, vorgesehen sein, das die Recheneinrichtung 100, die Speichereinrichtung 200 und das Kryptografiemodul 300 aufweist. Vorzugsweise sind alle Komponenten 100, 200, 300 auf demselben Halbleitersubstrat 1000a angeordnet.

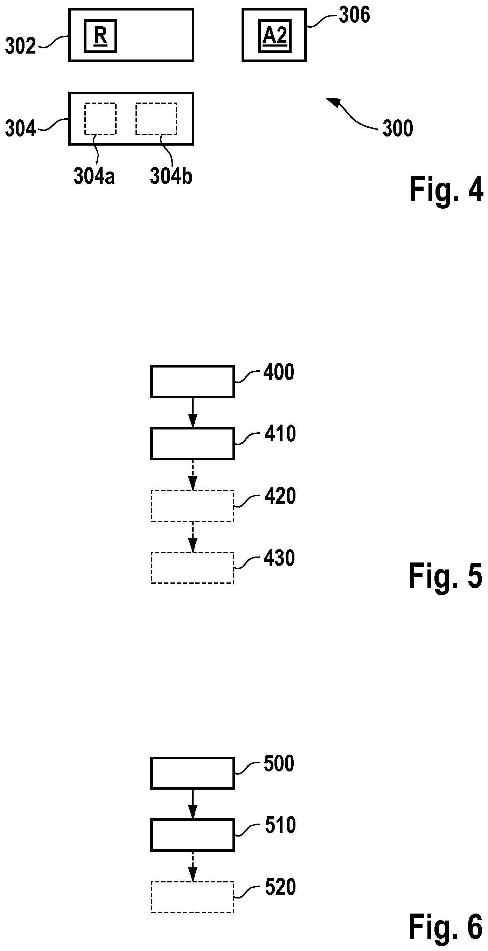

Figur 4 zeigt schematisch ein vereinfachtes Blockdiagramm eines Kryptografiemoduls 300 gemäß einer Ausführungsform. Das Kryptografiemodul 300 weist eine Speichereinheit 302 zur Speicherung wenigstens eines Referenzwerts R und/oder eines Referenzlayouts für zu überprüfende Computerprogramme PRG1 (Fig. 1) auf, sowie eine Recheneinheit 304, die zur Ausführung der genannten Überprüfung Computerprogramms PRG1 ausgebildet und vorzugsweise vollständig als Hardwareschaltung ausgebildet ist. Alternativ kann die Recheneinheit 304 auch einen Rechenkern 304a und eine Speichereinrichtung 304b für eine Betriebssoftware aufweisen, die einen Betrieb des Kryptografiemoduls 300 steuert. Weiter weist das Kryptografiemodul 300 eine Ergebnis-Speichereinheit 306 auf, auf die die Recheneinrichtung 100 (Fig. 1, 3), 100a (Fig. 2) lesend, nicht jedoch schreiben zugreifen kann.

Figur 5 zeigt schematisch ein vereinfachtes Flussdiagramm eines Verfahrens gemäß einer Ausführungsform. In Schritt 400 sendet die Recheneinrichtung 100 (Fig. 1) den Steuerbefehl A1, der vorliegend beispielhaft das erste Computerprogramm PRG1 bzw. seinen Speicherbereich in der Speichereinrichtung 200 charakterisiert, an das Kryptografiemodul 300. Dadurch wird das Kryptografiemodul 300 darüber informiert, welches Computerprogramm bzw. welchen Speicherbereich der Speichereinrichtung 200 es überprüfen soll. In Schritt 410 (Fig. 5) führt die Recheneinrichtung 100 das erste Computerprogramm PRG1 aus, insbesondere ohne die genannte Überprüfung abzuwarten. In dem optionalen Schritt 420 liest die Recheneinrichtung 100 eine Antwort bzw. ein Ergebnis A2 (Fig. 3), das das Kryptografiemodul 300 in Abhängigkeit des Steuerbefehls A1 gebildet hat, aus, z.B. direkt aus der Ergebnis-Speichereinheit 306 gemäß Fig. 4. In dem optionalen Schritt 430 steuert die Recheneinrichtung 100 ihren Betrieb in Abhängigkeit von dem Ergebnis A2. Die Antwort bzw. das Ergebnis A2 kann z.B. Informationen über das Ergebnis der Überprüfung des durch den Steuerbefehl A1 charakterisierten Computerprogramms PRG1 bzw. des dem ersten Computerprogramm PRG1 zugeordneten Speicherbereichs der Speichereinrichtung 200 aufweisen.

Bei weiteren bevorzugten Ausführungsformen ist vorgesehen, dass das Kryptografiemodul 300 dazu ausgebildet ist, die Überprüfung des ersten Computerprogramms PRG1 bzw. des wenigstens einen Speicherbereichs unter Verwendung eines schlüsselbasierten Nachrichtenauthentifizierungscodes, CMAC (Cipher-based Message Authentication Code), auszuführen. Dadurch ist eine besonders effiziente Überprüfung ermöglicht. Eine Internetpublikation, die sich auf eine beispielhafte Ausgestaltung des CMAC-Verfahrens bezieht, ist beispielsweise unter https://doi.org/10.6028%2Fnist.sp.800-38b abrufbar. Ein Ergebnis der Überprüfung kann z.B. in den Ergebnis-Speicherbereich 306 (Fig. 4) des Kryptografiemoduls 300 geschrieben werden, auf den die Recheneinrichtung 100, 100a lesend (bevorzugt nur lesend, nicht schreibend) zugreifen kann. Somit kann die Recheneinrichtung 100, 100a bei weiteren bevorzugten Ausführungsformen das Ergebnis der Überprüfung aus diesem Speicherbereich 306 des Kryptografiemoduls 300 auslesen. Alternativ oder ergänzend kann bei weiteren Ausführungsformen das Kryptografiemodul 300 die Antwort bzw. das Ergebnis A2 auch an die Recheneinrichtung 100, 100a senden.

Figur 6 zeigt schematisch ein vereinfachtes Flussdiagramm eines Verfahrens zum Betreiben des Kryptografiemoduls 300 (Fig. 4) gemäß einer Ausführungsform. In Schritt 500 (Fig. 6) empfängt das Kryptografiemodul 300 der ersten Steuerbefehl A1 von der Recheneinrichtung 100, 100a. In Schritt 510 überprüft das Kryptografiemodul 300 das durch den ersten Steuerbefehl A1 charakterisierte erste Computerprogramm PRG1, beispielsweise unter Verwendung einer CMAC-Berechnung. In dem optionalen Schritt 520 ermittelt das Kryptografiemodul 300 eine Antwort A2 auf den ersten Steuerbefehl A1, wobei insbesondere die Antwort A2 Informationen über das Ergebnis der Prüfung 510 des durch den Steuerbefehl A1 charakterisierten Computerprogramms PRG1 bzw. des dem ersten Computerprogramm PRG1 zugeordneten Speicherbereichs der Speichereinrichtung 200, 200a aufweist.

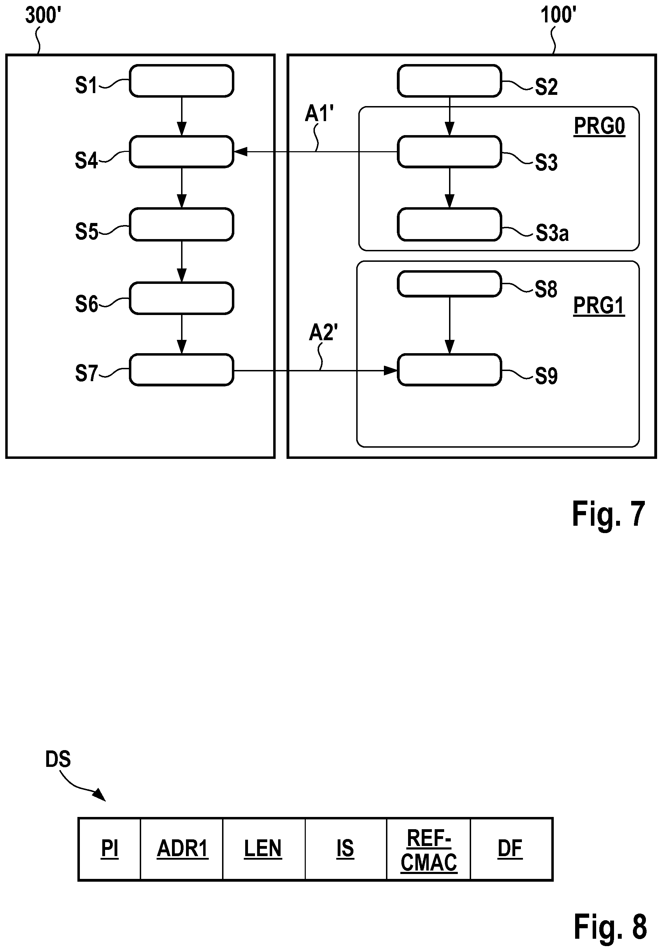

Figur 7 zeigt schematisch ein vereinfachtes Blockdiagramm einer weiteren Ausführungsform. Der Bereich 100' umfasst i.w. auf Seiten der Recheneinrichtung 100 ausgeführte Schritte, und der Bereich 300` umfasst i.w. auf Seiten des Kryptografiemoduls 300 ausgeführte Schritte. In Schritt S1 wird das Kryptografiemodul 100 aktiviert bzw. initialisiert. In Schritt S2 wird die Recheneinrichtung 100 aktiviert bzw. initialisiert. Die Schritte S1, S2 können bei manchen Ausführungsformen bevorzugt zumindest i.w. zeitgleich zueinander erfolgen, oder zeitlich versetzt zueinander.

Nach der Initialisierung S2 führt die Recheneinrichtung 100 ein Starprogramm PRG0 (beispielsweise einen Bootloader BL (Fig. 1) oder ein durch einen Bootloader BL gestartetes Programm) aus. In Schritt S3 wird ein erster Steuerbefehl A1 ` an das Kryptografiemodul 300 gesendet, der ein erstes von dem Kryptografiemodul 100 zu prüfendes Computerprogramm PRG1 charakterisiert, z.B. den ihm zugeordneten Adressbereich in der Speichereinrichtung 200, 200a beschreibt. Sodann führt die Recheneinrichtung 100 direkt das erste Computerprogramm PRG1 aus, vgl. Schritt S3a, insbesondere ohne ein Ergebnis der Überprüfung des ersten Computerprogramms PRG1 durch das Kryptografiemodul 300 abzuwarten. Dadurch wird das erste Computerprogramm PRG1 in der Recheneinrichtung aktiv, vgl. Block PRG1 aus Fig. 7.

Nach dem Erhalt des ersten Steuerbefehls A1` durch das Kryptografiemodul 300, vgl. Schritt S4, überprüft das Kryptografiemodul 300 in Schritt S5 das erste Computerprogramm PRG1. Das Überprüfen in Schritt S5 umfasst beispielsweise die Bildung eines CMAC-Werts in Abhängigkeit des ersten Computerprogramms PRG1 bzw. eines entsprechenden Speicherinhalts der das erste Computerprogramm PRG1 speichernden Speichereinrichtung 200, 200a und einen Vergleich mit einem Referenz-CMAC-Wert R. Die Informationen, welcher Speicherbereich zu prüfen ist, und welcher (z.B. CMAC-) Referenzwert R hierfür zu nutzen ist, kann das Kryptografiemodul 300 beispielsweise den in der Speichereinheit 302 gespeicherten Referenzdaten (und/oder dem ersten Steuerbefehl A1') entnehmen. In Schritt S6 speichert das Kryptografiemodul 300 das Ergebnis der Überprüfung aus Schritt S5, bevorzugt intern (insbesondere in einem Speicher 302 bzw. Speicherbereich, auf den keine andere Einheit lesend oder schreibend zugreifen kann), und in Schritt S7 wird eine entsprechende Antwort A2` an die Recheneinrichtung 100 gesendet. Alternativ kann das Ergebnis der Überprüfung aus Schritt S5 in Schritt S6 auch (ggf. zusätzlich) in der Ergebnis-Speichereinheit 306 gespeichert werden, wo es durch die Recheneinrichtung 100 gelesen werden kann. Bei weiteren Ausführungsformen ist auch denkbar, dass das Kryptografiemodul eine Unterbrechungsanforderung ("interrupt") A2` an die Recheneinrichtung sendet, sobald die Überprüfung S5 abgeschlossen ist.

Wie vorstehend unter Bezugnahme auf Fig. 3 bereits angedeutet ist bei weiteren bevorzugten Ausführungsformen vorgesehen, dass das Kryptografiemodul 300 eine, vorzugsweise in das Kryptografiemodul 300 integrierte, Speichereinheit 302 zur Speicherung wenigstens eines Referenzwerts R und/oder eines Referenzlayouts für den wenigstens einen Speicherbereich bzw. das wenigstens eine zu überprüfende Computerprogramm PRG1 aufweist. Bei weiteren bevorzugten Ausführungsformen kann der Referenzwert R beispielsweise einen CMAC-Wert für das Computerprogramm PRG1 bzw. einen vorgebbaren Speicherinhalt repräsentieren, der beispielsweise mit einem CMAC-Wert vergleichbar ist, der bei der Überprüfung des wenigstens einen ersten Computerprogramms bzw. Speicherbereichs durch das Kryptografiemodul ermittelt worden ist. Sofern der ermittelte CMAC-Wert von dem Referenzwert R abweicht, kann auf eine unzulässige Veränderung des Speicherinhalts des überprüften Speicherbereichs geschlossen werden.

Bei weiteren bevorzugten Ausführungsformen ist vorgesehen, dass das Kryptografiemodul 300 dazu ausgebildet ist, die Überprüfung in Abhängigkeit des Referenzwerts R auszuführen. Bei diesen Ausführungsformen umfasst die Überprüfung beispielsweise die Bildung eines CMAC-Werts in Abhängigkeit des ersten Computerprogramms PRG1 bzw. des Speicherinhalts des wenigstens einen Speicherbereichs und einen Vergleich des so gebildeten CMAC-Werts mit dem Referenzwert R (Fig. 4), wie er beispielsweise in der Speichereinheit 302 des Kryptografiemoduls 300 hinterlegt ist. Alternativ oder ergänzend kann der Referenzwert R bei weiteren bevorzugten Ausführungsformen auch durch die Recheneinrichtung 100, 100a mittels des ersten Steuerbefehls A1 an das Kryptografiemodul 300 gesendet werden. Weiter alternativ oder ergänzend können bei weiteren Ausführungsformen auch mehrere Referenzwerte R für mehrere zu überprüfende Speicherbereiche bzw. Computerprogramme PRG1, BL, .. mittels des ersten Steuerbefehls A1 an das Kryptografiemodul 300 gesendet werden.

Bei weiteren bevorzugten Ausführungsformen kann ein Referenzlayout ein oder mehrere der folgenden Informationen enthalten: a) Anzahl der Computerprogramme bzw. Speicherbereiche in der Speichereinrichtung, auf die die Recheneinrichtung zugreifen kann, b) Adressbereich (Startadresse und/oder Endadresse) der betreffenden Computerprogramme bzw. Speicherbereiche, c) Länge der betreffenden Computerprogramme bzw. Speicherbereiche, d) wenigstens einen Referenzwert (beispielsweise ein CMAC-Wert) des betreffenden Computerprogramms bzw. Speicherbereichs, e) Daten betreffend eine kryptografische Signatur, beispielsweise eine Signaturadresse und/oder einen Signaturtyp und/oder eine Referenz auf ein übergeordnetes Zertifikat ("root certificate"). Die Informationen können bevorzugt in einer mehrere entsprechende Datenfelder aufweisenden Datenstruktur DS gespeichert sein, vgl. Figur 8, z. B. in der Speichereinheit 302 (Fig. 3).

Bei weiteren bevorzugten Ausführungsformen kann das Kryptografiemodul 300 die vorstehend genannten Referenzwerte bzw. das Referenzlayout nutzen, um die Art und den Umfang einer Überprüfung wenigstens eines Computerprogramms PRG1 bzw. Speicherbereichs festzulegen. Beispielsweise kann anhand einer Startadresse und Endadresse die Menge der Eingangsdaten für die Überprüfung (z.B. CMAC-Wert-Bildung) festgelegt werden.

Bei weiteren besonders bevorzugten Ausführungsformen ist vorgesehen, dass die Recheneinrichtung 100, 100a dazu ausgebildet ist, das erste Computerprogramm PRG1 direkt nach dem Senden 400 (Fig. 5) des ersten Steuerbefehls A1 an das Kryptografiemodul 300 auszuführen 410, insbesondere ohne auf eine bzw. die Antwort des Kryptografiemoduls 300 auf den ersten Steuerbefehl A1 zu warten und/oder ohne die Antwort aus dem Kryptografiemodul 300 auszulesen 420. Bei diesen Ausführungsformen kommt das erste Computerprogramm PRG1 also bereits zur Ausführung durch die Recheneinrichtung 100, 100a (vgl. Block PRG1 aus Figur 7), noch bevor eine Überprüfung des ersten Computerprogramms PRG1 durch das Kryptografiemodul 300 abgeschlossen ist bzw. das Ergebnis der Überprüfung des ersten Computerprogramms PRG1 durch das Kryptografiemodul 300 von der Recheneinrichtung 100, 100a (z.B. in Form der Antwort A2, A2` auf den ersten Steuerbefehl) ausgelesen wird. Damit ist eine besonders schnelle Ausführung des ersten Computerprogramms PRG1 durch die Recheneinrichtung 100, 100a sichergestellt, und gleichzeitig ist die Überprüfung des ersten Computerprogramms PRG1 durch das Kryptografiemodul 300 mittels des ersten Steuerbefehls bereits initiiert worden.

Bei weiteren bevorzugten Ausführungsformen ist vorgesehen, dass die Recheneinrichtung 100, 100a dazu ausgebildet ist, auf eine bzw. die Antwort A2 des Kryptografiemoduls 300 auf den ersten Steuerbefehl A1 zu warten und/oder die Antwort A2 aus dem Kryptografiemodul 300 auszulesen, und erst nach einem Empfang bzw. dem Auslesen der Antwort das erste Computerprogramm PRG1 auszuführen. Damit ist eine besonders sichere Ausführung des ersten Computerprogramms PRG1 ermöglicht, die erst nach der Überprüfung durch das Kryptografiemodul 300 erfolgt.

Bei weiteren bevorzugten Ausführungsformen ist wie bereits vorstehend erwähnt vorgesehen, dass die Recheneinrichtung 100, 100a dazu ausgebildet ist, einen Betrieb der Recheneinrichtung 100, 100a in Abhängigkeit der Antwort A2 zu steuern. Dadurch kann beispielsweise bei einem negativen Ergebnis der Überprüfung des ersten Computerprogramms PRG1 durch das Kryptografiemodul 300 (erstes Computerprogramm ist beispielsweise aufgrund eines Fehlers in der Speichereinrichtung 200, 200a verändert oder (z.B. durch einen Angreifer) manipuliert worden) eine Fehlerreaktion durch die Recheneinrichtung 100, 100a und/oder das Kryptografiemodul 300 eingeleitet werden. Die Fehlerreaktion kann beispielsweise wenigstens eine der folgenden Maßnahmen vorsehen: Abbruch der Ausführung des ersten Computerprogramms PRG1 durch die Recheneinrichtung 100, 100a (sofern möglich), Verhinderung einer wiederholten bzw. neuerlichen Ausführung des ersten Computerprogramms PRG1 durch die Recheneinrichtung 100, 100a, Signalisierung eines Fehlerzustands an eine externe Einheit, Resetierung (Zurücksetzen) der Recheneinrichtung 100, 100a (insbesondere durch das Kryptografiemodul 300), zeitweise oder dauerhafte Deaktivierung der Recheneinrichtung 100, 100a, Löschung des ersten Computerprogramms PRG1 aus der Speichereinrichtung 200, 200a.

Das Prinzip gemäß den Ausführungsformen weist u.a. die nachstehend genannten Vorteile auf: a) es können effizient Manipulationen (wie auch fehlerbedingte Änderungen) am Inhalt der Speichereinrichtung 200, 200a, beispielsweise Manipulationen von darin gespeicherten Computerprogrammen PRG1, BL, während der Laufzeit der Recheneinrichtung 100, 100a und des Kryptografiemoduls 300 erkannt werden ("runtime manipulation detection", RTMD), b) das sichere Booten (also Starten) einer Software PRG1 auf der Recheneinrichtung 200, beispielsweise einer Anwendungssoftware, ist sichergestellt ("trusted boot"), c) auch nachträglich in die Speichereinrichtung 200, 200a gespeicherte Computerprogramme PRG1 bzw. sonstige Daten können vorteilhaft nach dem Prinzip gemäß den Ausführungsformen überprüft werden ("secure flashing"), d) ein Zugriff auf gegebenenfalls durch das Kryptografiemodul bereitgestellte kryptografische Schlüssel und andere sensible Informationen ist in Abhängigkeit der Überprüfung gemäß den Ausführungsformen steuerbar ("security access"), e) eine Bootreihenfolge (Reihenfolge der Abarbeitung von Computerprogrammen bei Start der Recheneinheit 100) kann beliebig gewählt werden, ohne dass die Sicherheit beeinträchtigt wird, f) durch den Einsatz des Kryptografiemoduls 300, gegebenenfalls mit einer dedizierten Hardwareschaltung, können leistungsfähige und sichere kryptografische Funktionen bereitgestellt werden, beispielsweise CMAC-Bildung, z.B. basierend auf 128 Bit AES (Advanced Encryption Standard), g) durch die Vorsehung von Referenzlayouts z.B. in Form der Datenstruktur DS nach Fig. 8 kann der Betrieb des Kryptografiemoduls 300 flexibel an unterschiedliche Speicherlayouts und sonstige Konfigurationen der Recheneinrichtung 100, 100a angepasst werden, h) durch die Übermittlung des ersten Steuerbefehls A1 können die zu überprüfenden Programme PRG1 bzw. Speicherbereiche dem Kryptografiemodul 300 dynamisch (z.B. zur Laufzeit des Kryptografiemoduls) signalisiert werden, i) durch die sofortige Ausführung 410 (Fig. 5) des ersten Computerprogramms PRG1 noch vor (vollständiger) Ausführung der Überprüfung durch das Kryptografiemodul 300 ergibt sich eine besonders kurze Startzeit für das Computerprogramm PRG1.

## Patentansprüche

1. Recheneinrichtung (100; 100a) mit wenigstens einem Rechenkern (110) zur Ausführung eines ersten Computerprogramms (PRG1), wobei die Recheneinrichtung (100; 100a) dazu ausgebildet ist, auf eine Speichereinrichtung (200; 200a) zuzugreifen, um das erste Computerprogramm (PRG1) zu laden, wobei die Recheneinrichtung (100; 100a) dazu ausgebildet ist, einen ersten Steuerbefehl (A1; A1'), der das erste Computerporgramm (PRG1) und/oder einen dem ersten Computerprogramm (PRG1) zugeordneten Speicherbereich der Speichereinrichtung (200; 200a) charakterisiert, an wenigstens ein Kryptografiemodul (300) zu senden (400), wobei das Kryptografiemodul (300) dazu ausgebildet ist, das durch den ersten Steuerbefehl (A1) charakterisierte Computerporgramm (PRG1) bzw. den dem ersten Computerprogramm (PRG1) zugeordneten Speicherbereich der Speichereinrichtung (200; 200a) zu überprüfen (510), wobei die Recheneinrichtung (100; 100a) dazu ausgebildet ist, das erste Computerprogramm (PRG1) auszuführen (410), wobei die Recheneinrichtung (100; 100a) dazu ausgebildet ist, das erste Computerprogramm (PRG1) direkt nach dem Senden (400) des ersten Steuerbefehls (A1; A1') an das Kryptografiemodul (300) auszuführen, ohne auf eine bzw. die Antwort (A2) des Kryptografiemoduls (300) auf den ersten Steuerbefehl (A1; A1') zu warten und/oder ohne die Antwort (A2) aus dem Kryptografiemodul (300) auszulesen (420), wobei die Recheneinrichtung (100; 100a) dazu ausgebildet ist, eine Antwort (A2; A2') des Kryptografiemoduls (300) auf den ersten Steuerbefehl (A1) zu empfangen oder aus dem Kryptografiemodul (300) auszulesen (420), wobei die Antwort (A2; A2') Informationen über das Ergebnis einer Prüfung des durch den Steuerbefehl (A1; A1') charakterisierten ersten Computerporgramms (PRG1) bzw. des dem ersten Computerprogramm (PRG1) zugeordneten Speicherbereichs der Speichereinrichtung (200; 200a) aufweist, wobei die Recheneinrichtung (100; 100a) dazu ausgebildet ist, einen Betrieb der Recheneinrichtung (100; 100a) in Abhängigkeit der Antwort (A2; A2') zu steuern (430).

2. Recheneinrichtung (100; 100a) nach Anspruch 1, wobei a) die Speichereinrichtung (200; 200a) in die Recheneinrichtung (100; 100a) integriert ist, oder wobei b) die Speichereinrichtung (200; 200a) extern zu der Recheneinrichtung (100; 100a) vorgesehen ist.

3. Verfahren zum Betreiben einer Recheneinrichtung (100; 100a) mit wenigstens einem Rechenkern (110) zur Ausführung eines ersten Computerprogramms (PRG1), wobei die Recheneinrichtung (100; 100a) dazu ausgebildet ist, auf eine Speichereinrichtung (200; 200a) zuzugreifen, um das erste Computerprogramm (PRG1) zu laden, wobei die Recheneinrichtung (100; 100a) einen ersten Steuerbefehl (A1), der das erste Computerporgramm (PRG1) und/oder einen dem ersten Computerprogramm (PRG1) zugeordneten Speicherbereich der Speichereinrichtung (200; 200a) charakterisiert, an wenigstens ein Kryptografiemodul (300) sendet (400), wobei das Kryptografiemodul (300) dazu ausgebildet ist, das durch den Steuerbefehl (A1) charakterisierte Computerporgramm (PRG1) bzw. den dem ersten Computerprogramm (PRG1) zugeordneten Speicherbereich der Speichereinrichtung (200; 200a) zu überprüfen (510), wobei die Recheneinrichtung (100; 100a) das erste Computerprogramm (PRG1) ausführt (410), wobei die Recheneinrichtung (100; 100a) das erste Computerprogramm (PRG1), direkt, nach dem Senden des ersten Steuerbefehls (A1; A1') an das Kryptografiemodul (300) ausführt, ohne auf eine bzw. die Antwort (A2; A2') des Kryptografiemoduls (300) auf den ersten Steuerbefehl (A1; A1') zu warten und/oder ohne die Antwort (A2; A2') aus dem Kryptografiemodul (300) auszulesen, wobei die Recheneinrichtung (100; 100a) eine Antwort (A2; A2') des Kryptografiemoduls (300) auf den ersten Steuerbefehl (A1; A1`) empfängt oder aus dem Kryptografiemodul (300) ausliest (420), wobei die Antwort (A2; A2') Informationen über das Ergebnis einer Prüfung des durch den Steuerbefehl (A1; A1') charakterisierten Computerporgramms (PRG1) bzw. des dem ersten Computerprogramm (PRG1) zugeordneten Speicherbereichs der Speichereinrichtung (200; 200a) aufweist, wobei die Recheneinrichtung (100; 100a) einen Betrieb der Recheneinrichtung (100; 100a) in Abhängigkeit der Antwort (A2; A2') steuert (430).

4. System (1000) aufweisend wenigstens eine Recheneinrichtung (100; 100a) nach wenigstens einem der Ansprüche 1 bis 2, wenigstens eine Speichereinrichtung (200; 200a), und wenigstens ein Kryptografiemodul (300), wobei das Kryptografiemodul (300) dazu ausgebildet ist, einen ersten Steuerbefehl (A1; A1'), der ein erstes Computerporgramm (PRG1) und/oder einen dem ersten Computerprogramm (PRG1) zugeordneten Speicherbereich der Speichereinrichtung (200; 200a) charakterisiert, von der Recheneinrichtung (200; 200a) zu empfangen (500), wobei das Kryptografiemodul (300) dazu ausgebildet ist, das durch den ersten Steuerbefehl (A1; A1') charakterisierte Computerporgramm (PRG1) bzw. den dem ersten Computerprogramm (PRG1) zugeordneten Speicherbereich der Speichereinrichtung (200; 200a) zu überprüfen (510), wobei insbesondere die wenigstens eine Recheneinrichtung (100; 100a) und die wenigstens eine Speichereinrichtung (200; 200a) und das wenigstens eine Kryptografiemodul (300) auf einem selben Halbleitersubstrat (1000a) angeordnet sind.

5. System (1000) nach Anspruch 4, wobei das Kryptografiemodul (300) dazu ausgebildet ist, eine Antwort (A2; A2') auf den ersten Steuerbefehl (A1; A1') zu ermitteln (520), wobei insbesondere die Antwort (A2; A2') Informationen über das Ergebnis einer Prüfung des durch den Steuerbefehl (A1; A1') charakterisierten Computerporgramms (PRG1) bzw. des dem ersten Computerprogramm (PRG1) zugeordneten Speicherbereichs der Speichereinrichtung (200; 200a) aufweist.

6. System (1000) nach Anspruch 4 oder 5, wobei das Kryptografiemodul (300) dazu ausgebildet ist, die Überprüfung (510) des wenigstens einen Computerporgramms (PRG1) bzw. Speicherbereichs unter Verwendung eines schlüsselbasierten Nachrichtenauthentifizierungscodes, CMAC, auszuführen.

## Claims

1. Computing device (100; 100a) with at least one computing core (110) for carrying out a first computer program (PRG1), wherein the computing device (100; 100a) is designed to access a memory device (200; 200a) to load the first computer program (PRG1), wherein the computing device (100; 100a) is designed to send a first control command (A1; A1'), which characterizes the first computer program (PRG1) and/or a memory area of the memory device (200; 200a) assigned to the first computer program (PRG1), to at least one cryptographic module (300) (400), wherein the cryptographic module (300) is designed to verify the computer program (PRG1) **characterized by** the first control command (A1) or the memory area of the memory device (200; 200a) assigned to the first computer program (PRG1) (510), wherein the computing device (100; 100a) is designed to execute the first computer program (PRG1) (410), wherein the computing device (100; 100a) is designed to execute the first computer program (PRG1) directly after the sending (400) of the first control command (A1; A1') to the cryptographic module (300) without waiting for a or the response (A2) of the cryptographic module (300) to the first control command (A1; A1') and/or without reading out the response (A2) from the cryptographic module (300) (420), wherein the computing device (100; 100a) is designed to receive a response (A2; A2') of the cryptographic module (300) to the first control command (A1) or to read it out from the cryptographic module (300) (420), wherein the response (A2; A2') has information about the result of a test of the first computer program (PRG1) **characterized by** the control command (A1; A1') or the memory area of the memory device (200; 200a) assigned to the first computer program (PRG1), wherein the computing device (100; 100a) is designed to control operation of the computing device (100; 100a) in dependence on the response (A2; A2') (430).

2. Computing device (100; 100a) according to Claim 1, wherein a) the memory device (200; 200a) is integrated in the computing device (100; 100a), or wherein b) the memory device (200; 200a) is provided externally from the computing device (100; 100a).

3. Method for operating a computing device (100; 100a) with at least one computing core (110) for carrying out a first computer program (PRG1), wherein the computing device (100; 100a) is designed to access a memory device (200; 200a) to load the first computer program (PRG1), wherein the computing device (100; 100a) sends a first control command (A1), which characterizes the first computer program (PRG1) and/or a memory area of the memory device (200; 200a) assigned to the first computer program (PRG1), to at least one cryptographic module (300) (400), wherein the cryptographic module (300) is designed to verify the computer program (PRG1) **characterized by** the control command (A1) or the memory area of the memory device (200; 200a) assigned to the first computer program (PRG1) (510), wherein the computing device (100; 100a) executes the first computer program (PRG1) (410), wherein the computing device (100; 100a) executes the first computer program (PRG1) directly after the sending of the first control command (A1; A1') to the cryptographic module (300) without waiting for a or the response (A2; A2') of the cryptographic module (300) to the first control command (A1; A1') and/or without reading out the response (A2; A2') from the cryptographic module (300), wherein the computing device (100; 100a) receives a response (A2; A2') of the cryptographic module (300) to the first control command (A1; A1') or reads it out from the cryptographic module (300) (420), wherein the response (A2; A2') has information about the result of a test of the computer program (PRG1) **characterized by** the control command (A1; A1') or the memory area of the memory device (200; 200a) assigned to the first computer program (PRG1), wherein the computing device (100; 100a) controls operation of the computing device (100; 100a) in dependence on the response (A2; A2') (430).

4. System (1000) comprising at least one computing device (100; 100a) according to at least one of Claims 1 to 2, at least one memory device (200; 200a), and at least one cryptographic module (300), wherein the cryptographic module (300) is designed to receive a first control command (A1; A1'), which characterizes a first computer program (PRG1) and/or a memory area of the memory device (200; 200a) assigned to the first computer program (PRG1), from the computing device (200; 200a) (500), wherein the cryptographic module (300) is designed to verify the computer program (PRG1) **characterized by** the first control command (A1; A1') or the memory area of the memory device (200; 200a) assigned to the first computer program (PRG1) (510), wherein in particular the at least one computing device (100; 100a) and the at least one memory device (200; 200a) and the at least one cryptographic module (300) are arranged on the same semiconductor substrate (1000a).

5. System (1000) according to Claim 4, wherein the cryptographic module (300) is designed to determine a response (A2; A2') to the first control command (A1; A1') (520), wherein in particular the response (A2; A2') has information about the result of a test of the computer program (PRG1) **characterized by** the control command (A1; A1') or the memory area of the memory device (200; 200a) assigned to the first computer program (PRG1).

6. System (1000) according to Claim 4 or 5, wherein the cryptographic module (300) is designed to carry out the verification (510) of at least one computer program (PRG1) or memory area using a key-based message authentication code, CMAC.

## Revendications

1. Dispositif de calcul (100 ; 100a) comprenant au moins un noyau de calcul (110) pour exécuter un premier programme informatique (PRG1), dans lequel le dispositif de calcul (100 ; 100a) est réalisé pour accéder à un dispositif de mémoire (200 ; 200a) pour charger le premier programme informatique (PRG1), dans lequel le dispositif de calcul (100 ; 100a) est réalisé pour envoyer (400) à au moins un module de cryptographie (300) une première instruction de commande (A1 ; A1') qui caractérise le premier programme informatique (PRG1) et/ou une zone de mémoire du dispositif de mémoire (200 ; 200a), associée au premier programme informatique (PRG1), dans lequel le module de cryptographie (300) est réalisé pour vérifier (510) le programme informatique (PRG1) ou la zone de mémoire du dispositif de mémoire (200 ; 200a), associée au premier programme informatique (PRG1), caractérisé(e) par la première instruction de commande (A1), dans lequel le dispositif de calcul (100 ; 100a) est réalisé pour exécuter (410) le premier programme informatique (PRG1), dans lequel le dispositif de calcul (100 ; 100a) est réalisé pour exécuter le premier programme informatique (PRG1) immédiatement après l'envoi (400) de la première instruction de commande (A1 ; A1') au module de cryptographie (300) sans attendre une ou la réponse (A2) du module de cryptographie (300) à la première instruction de commande (A1 ; A1') et/ou sans lire (420) la réponse (A2) dans le module de cryptographie (300), dans lequel le dispositif de calcul (100 ; 100a) est réalisé pour recevoir ou lire (420) dans le module de cryptographie (300) une réponse (A2 ; A2') du module de cryptographie (300) à la première instruction de commande (A1), dans lequel la réponse (A2 ; A2') présente des informations concernant le résultat d'une vérification du premier programme informatique (PRG1) ou de la zone de mémoire du dispositif de mémoire (200 ; 200a), associée au premier programme informatique (PRG1), caractérisé(e) par l'instruction de commande (A1 ; A1'), dans lequel le dispositif de calcul (100 ; 100a) est réalisé pour commander (430) un fonctionnement du dispositif de calcul (100 ; 100a) en fonction de la réponse (A2 ; A2').

2. Dispositif de calcul (100 ; 100a) selon la revendication 1, dans lequel a) le dispositif de mémoire (200 ; 200a) est intégré dans le dispositif de calcul (100 ; 100a), ou dans lequel b) le dispositif de mémoire (200 ; 200a) est prévu en externe par rapport au dispositif de calcul (100 ; 100a).

3. Procédé permettant de faire fonctionner un dispositif de calcul (100 ; 100a) comprenant au moins un noyau de calcul (110) pour exécuter un premier programme informatique (PRG1), dans lequel le dispositif de calcul (100 ; 100a) est réalisé pour accéder à un dispositif de mémoire (200 ; 200a) pour charger le premier programme informatique (PRG1), dans lequel le dispositif de calcul (100 ; 100a) envoie (400) à au moins un module de cryptographie (300) une première instruction de commande (A1) qui caractérise le premier programme informatique (PRG1) et/ou une zone de mémoire du dispositif de mémoire (200 ; 200a), associée au premier programme informatique (PRG1), dans lequel le module de cryptographie (300) est réalisé pour vérifier (510) le programme informatique (PRG1) ou la zone de mémoire du dispositif de mémoire (200 ; 200a), associée au premier programme informatique (PRG1), caractérisé(e) par l'instruction de commande (A1), dans lequel le dispositif de calcul (100 ; 100a) exécute (410) le premier programme informatique (PRG1), dans lequel le dispositif de calcul (100 ; 100a) exécute le premier programme informatique (PRG1) immédiatement après l'envoi de la première instruction de commande (A1 ; A1') au module de cryptographie (300) sans attendre une ou la réponse (A2 ; A2') du module de cryptographie (300) à la première instruction de commande (A1 ; A1') et/ou sans lire la réponse (A2 ; A2') dans le module de cryptographie (300), dans lequel le dispositif de calcul (100 ; 100a) reçoit du ou lit (420) dans le module de cryptographie (300) une réponse (A2 ; A2') du module de cryptographie (300) à la première instruction de commande (A1 ; A1'), dans lequel la réponse (A2 ; A2') présente des informations concernant le résultat d'une vérification du programme informatique (PRG1) ou de la zone de mémoire du dispositif de mémoire (200 ; 200a), associée au premier programme informatique (PRG1), caractérisé(e) par l'instruction de commande (A1 ; A1'), dans lequel le dispositif de calcul (100 ; 100a) commande (430) un fonctionnement du dispositif de calcul (100 ; 100a) en fonction de la réponse (A2 ; A2').

4. Système (1000) présentant au moins un dispositif de calcul (100 ; 100a) selon au moins l'une des revendications 1 à 2, au moins un dispositif de mémoire (200 ; 200a) et au moins un module de cryptographie (300), dans lequel le module de cryptographie (300) est réalisé pour recevoir (500) du dispositif de calcul (200 ; 200a) une première instruction de commande (A1 ; A1') qui caractérise un premier programme informatique (PRG1) et/ou une zone de mémoire du dispositif de mémoire (200 ; 200a), associée au premier programme informatique (PRG1), dans lequel le module de cryptographie (300) est réalisé pour vérifier (510) le programme informatique (PRG1) ou la zone de mémoire du dispositif de mémoire (200 ; 200a), associée au premier programme informatique (PRG1), caractérisé(e) par la première instruction de commande (A1 ; A1'), dans lequel en particulier ledit au moins un dispositif de calcul (100 ; 100a) et ledit au moins un dispositif de mémoire (200 ; 200a) et ledit au moins un module de cryptographie (300) sont disposés sur un même substrat semi-conducteur (1000a).

5. Système (1000) selon la revendication 4, dans lequel le module de cryptographie (300) est réalisé pour établir (520) une réponse (A2 ; A2') à la première instruction de commande (A1 ; A1), dans lequel en particulier la réponse (A2 ; A2') présente des informations concernant le résultat d'une vérification du programme informatique (PRG1) ou de la zone de mémoire du dispositif de mémoire (200 ; 200a), associée au premier programme informatique (PRG1), caractérisé(e) par l'instruction de commande (A1 ; A1').

6. Système (1000) selon la revendication 4 ou 5, dans lequel le module de cryptographie (300) est réalisé pour effectuer la vérification (510) dudit au moins un programme informatique (PRG1) ou de la zone de mémoire en utilisant un code d'authentification de message à base de clés, CMAC.
